# EUROPEAN PATENT APPLICATION

(11) **EP 0 835 794 A1**
(43) Date of publication of application: **15.04.1998**
(21) Application number: 96307349.9
(22) Date of filing: 09.10.1996
(51) Int. Cl.: B62B 1/00, B62B 3/10

(54) **Multi-purpose dolly-truck**

(71) Applicant: Premier Drywall Tool Company, Inc., Stockton, California 95206 (US)
(72) Inventor: Stich, Richard G., Santa Barbara, California 93105 (US)
(74) Representative: Atkinson, Ralph

(57) **Abstract**

A multi-purpose, movable apparatus (henceforth dolly-truck) for conveying objects, such as, for example, a five-gallon, cylindrical, industrial bucket, is described. A dolly-truck includes a one-piece, molded plastic base (12) having caster wheels (10) and truck wheels (14). The caster wheels (10) are mounted on a lower surface of the base and provide short distance rolling movement capability in the upright position. Connected to the base are two truck support arms (13) which support an axle (11) with two truck wheels (14). The truck wheels provide a hand truck capability for negotiating stairs, by-passing obstacles and an omnidirectional capability in conveyance of objects. Centered on the base is a retaining wall (6) for receiving and holding objects. Connected to, and integrated into the retaining wall is an adjustable handle (1) for conveying the dolly-truck by hand. The handle can be used to move the dolly-truck on the caster wheels as a convential dolly, or alternatively on the truck wheels as a convential hand truck. The base of the dolly-truck is surrounded by an optional kick ring (8) which allows the dolly-truck to be conveyed by foot. An annular surface of the base outside the retaining wall and inside the kick ring forms a spill surface that prevents spillage of liquid from an open bucket onto the floor.

## Description

### FIELD OF THE INVENTION

This invention generally relates to an apparatus and method for conveying objects and in particular to an apparatus and method for conveying a bucket of liquid for short distances with rolling motion of a dolly and over small obstacles with tilting motion of a truck.

### BACKGROUND OF THE INVENTION

Buckets of various sorts are utilized for numerous activities and can have a bail type handle. Some common uses of such buckets are for holding paint, dry wall joint compound, chemicals, food, plastics, asphalt, tar, farm feed and cleaning fluids. When buckets are emptied of material, they are commonly used for holding water, other liquids, tools, nails, screws and other small parts. Such buckets are commonly carried by hand, sometimes physically straining the neck, shoulders, forearms, back, and/or wrists, of the persons carrying the buckets.

To transport such buckets, dollies with caster wheels are used in the prior art. A caster wheel is a wheel mounted to permit the wheel to swivel freely. Caster wheels permit short distance rolling movements of a dolly. Using a dolly, a bucket can be moved on a floor without lifting or tipping the dolly.

One disadvantage of prior art dollies is that a dolly can convey an open bucket only on a smooth floor. Any drag or any obstacle such as extension cords, stairs and sudden floor elevation changes will stop the dolly's motion and can spill a liquid contained in the bucket being carried by the dolly. Moreover, a dolly's front wheels cannot be raised to, for instance, go over an extension cord. Going up or down stairs with a dolly is also difficult because the swiveling nature of caster wheels frequently results in one wheel facing the stairs while another wheel is in a different position, which can, in turn, result in dragging. To negotiate such obstacles, the dolly and bucket both have to be carried over the obstacle.

Also in the prior art, hand trucks are used to transport buckets. A typical prior art hand truck has a handle and a pair of non-swiveling, parallel truck wheels on which the hand truck can be pivoted. Using a hand truck, a sealed bucket can be lifted from its upright position and moved in a tilted position and over obstacles such as extension cords and stairs.

Although a hand truck can negotiate obstacles, a hand truck cannot easily be rolled along a floor (in an upright position) as necessary for short distance movements in cases where work commonly starts and stops (such as, for example, painting hallways, maintaining hardware, moving containers around a kitchen, cleaning with mops in the bucket, vacuuming a floor and dispensing liquid on a driveway). Moreover, a hand truck cannot convey open containers of liquid because the liquid can spill when a hand truck is tilted. Liquid sloshed out of an open bucket can land on the floor and be conveyed by the wheels or cause the floor to be slippery and thus dangerous.

### SUMMARY OF INVENTION

In accordance with this invention, a single apparatus called a "dolly-truck" is provided which has caster wheels for short distance rolling movement of an object in an upright position as well as truck wheels for moving the object in a tilted position over obstacles. Thus, the dolly-truck has the versatility to be used as a dolly and can be tilted back and to be used as a hand truck. The dolly-truck provides a very stable mechanical structure for moving objects such as open or closed buckets, various kinds of barrel containers, and five-gallon open containers.

The dolly-truck of this invention has a stabilizing body structure, utilizing caster wheels mounted at a sufficient distance from the body center to provide stability to the dolly-truck. In one embodiment of this invention, the dolly-truck body includes a retaining wall to hold the object being transported in place during movement of the dolly-truck. In a variation of this embodiment, the retaining wall has holes so that labels on the object are visible. In another variation of this embodiment, the retaining wall includes a retaining ring typically but not necessarily at the top of the retaining wall with retaining knobs which permit the object to be securely fastened to the dolly-truck. The retaining wall and ring have closed circular shapes in one embodiment and open semicircular shapes in another embodiment.

The dolly-truck also has a handle which is adjustably attached to the dolly-truck body. In one embodiment, the handle is frictionally supported in extension tubes of the retaining wall by adjustment knobs. The handle can be raised or lowered, depending on the height of the user. The adjustment knobs, when tightened, prevent the handle from moving either up or down in the extension tubes while the dolly-truck is being utilized. The handle is used by a user to roll the dolly-truck in an upright position along a floor or surface and also to move the dolly-truck in a tilted position over obstacles. The handle has a brace for stability. In one embodiment, the brace has a shape which permits two or more buckets (either filled or empty) to be stacked one on top of the other and moved by a single dolly-truck. If the handle interferes with any given process, the handle can be detached from the retaining wall and the retaining ring can be used to lift and carry the dolly-truck with its load when necessary.

In another embodiment, the dolly-truck has a kick ring to permit short distance rolling movement in the upright position by a user pushing on the kick ring with the user's foot. The kick ring frees the user's hands while the dolly-truck is propelled by foot. In one embodiment, a spill surface formed between the kick ring and the retaining wall holds any liquid spilled during any movement (in either the upright or tilted position). The spill surface can also be used to carry tools.

In one embodiment, the dolly-truck has shielded ball caster wheels which carry load easily on flat, smooth, and carpeted surfaces. The shielded ball caster wheels also prevent spilled liquid from being conveyed or tracked by the wheels. The body of the dolly-truck is formed from one piece of injection molded, high-strength plastic. The parts of the dolly truck which hold the handle, the truck wheels and the caster wheels are molded into the body. To assemble the dolly-truck, the axle and the truck wheels are attached and the caster wheels are popped into molded holes in the bottom of the unit. The handle is placed into the extension tubes and the adjustment knobs are tightened to secure the handle to the body.

In alternative embodiments, the dolly-truck is made out of fiberglass, steel tubing and/or formed out of aluminum, and retains one or more of the same major features discussed above.

### BRIEF DESCRIPTION OF THE DRAWINGS

FIG. 1 illustrates one embodiment of a dolly-truck in an upright position in accordance with this invention.

FIG. 2A illustrates a bottom view of the body of the dolly-truck taken in the Y direction shown in FIG. 1.

FIG. 2B illustrates a sleeve and a corresponding caster wheel for use in the body of FIG. 2A.

FIG. 3A illustrates an isometric cross-sectional view of the body of the dolly-truck taken in the X-X direction shown in FIG. 1.

FIG. 3B illustrates a close-up of a portion of the body cross-section circled in FIG. 3A.

FIG. 3C illustrates the assembly of the caster wheel of FIG. 2B into the body of FIG. 3B.

FIG. 3D illustrates a locking caster wheel.

FIG. 4 illustrates one embodiment of a dolly-truck in a tilted position in accordance with this invention.

FIG. 5 illustrates a bottom view of one embodiment of a dolly-truck.

FIGs. 6A, 6B and 6C illustrate a dolly-truck handle brace having lid clips for holding the lid of a bucket in accordance with this invention.

FIGs. 7A, 7B and 7C illustrate a dolly-truck having an open semicircular retaining wall and an open semicircular retaining ring in accordance with this invention.

### DETAILED DESCRIPTION

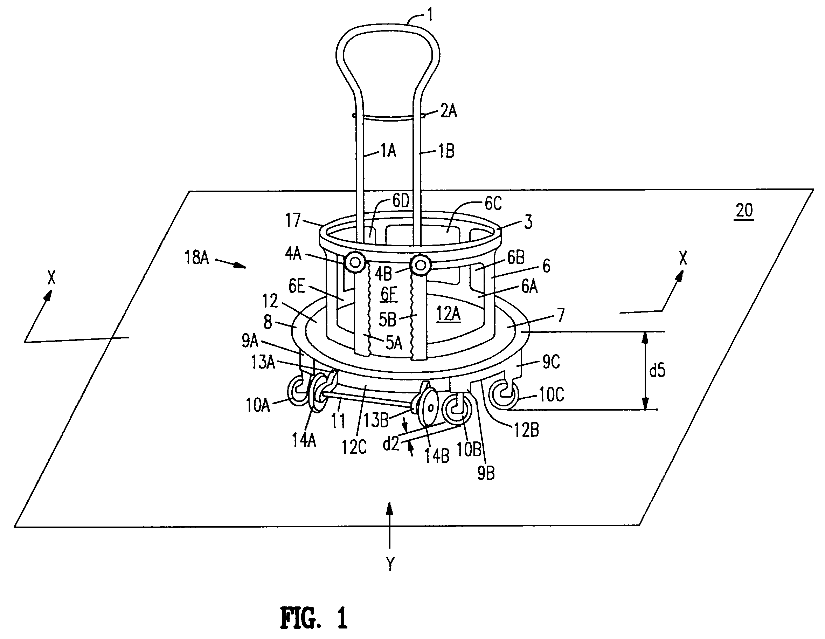

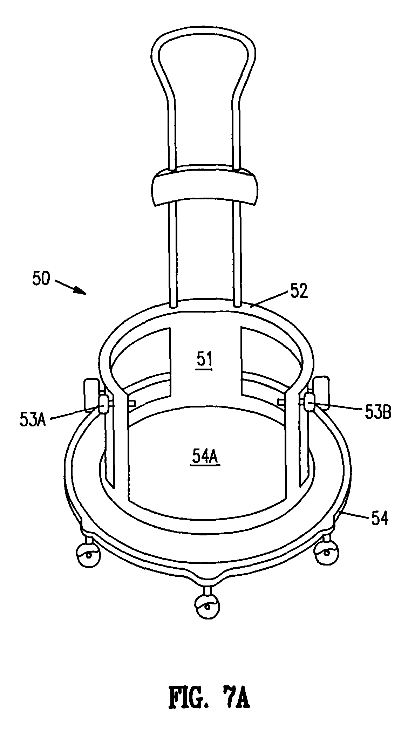

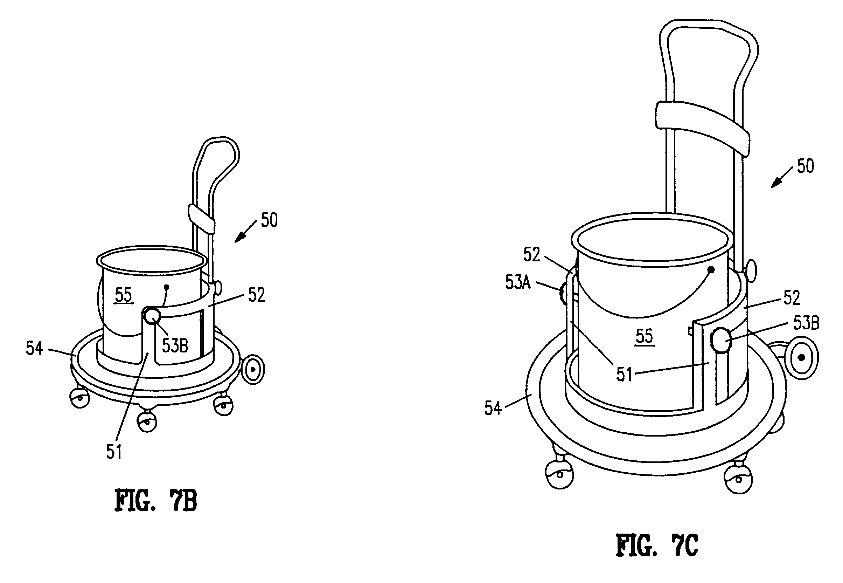

FIG. 1 illustrates one embodiment of a dolly-truck 18A in accordance with this invention. As shown in FIG. 1, a dolly-truck 18A includes a body 17 for supporting the object to be conveyed, such as, for example, an open bucket of liquid (shown in FIGs. 7A and 7B for another embodiment). Body 17 includes a base 12 having an upper surface 12A, a lower surface 12B and a periphery 12C. In one embodiment, base 12 is a fiberglass disk 3/4 inch thick and 16 inches in diameter.

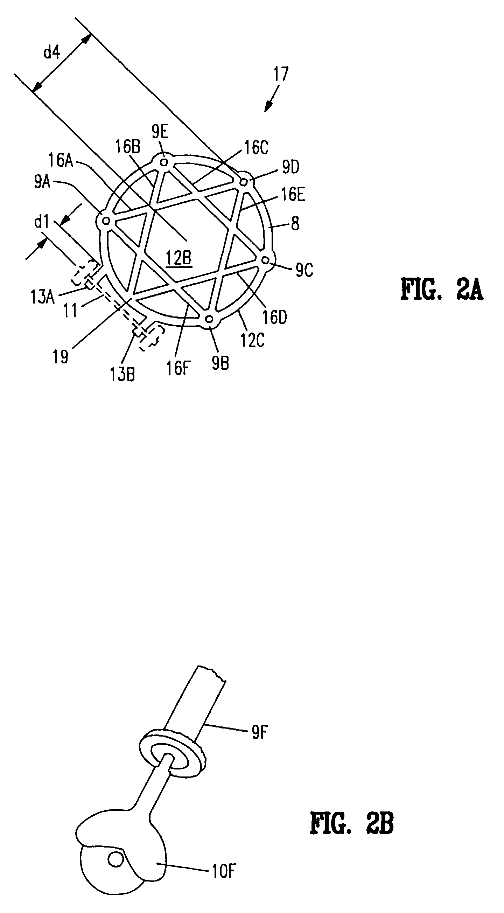

On periphery 12C of base 12 are provided a number of caster wheel supports 9A, 9B and 9C. Although only three caster wheel supports 9A, 9B and 9C are visible in FIG. 1, dolly-truck 18A in this embodiment has a total of five caster wheel supports which are integrally connected to base 12 (see FIG. 2). Other numbers of caster wheel supports such as three, four, six or more can also be used if desired.

FIG. 2A shows a bottom view of body 17 of dolly-truck 18A of FIG. 1 as seen in the Y (i.e. vertical) direction. As shown in FIG. 2A, caster wheel supports 9A, 9B, 9C, 9D and 9E are arranged at five corner-points of a hexagon which is substantially enclosed in periphery 12C of base 12 (Fig. 1). In one embodiment, caster wheel supports 9A, 9B, 9C, 9D and 9E are metal sleeves approximately 1 inch in outer diameter, 1/4 inch in inner diameter and 2 inches in length. FIG. 2B illustrates a typical sleeve 9F which can be used as one of caster wheel supports 9A, 9B, 9C, 9D and 9E (FIG. 2A).

On periphery 12C of base 12 are also provided a pair of truck wheel supports 13A and 13B integrally connected to base 12. Truck wheel supports 13A and 13B are arranged equidistant from a sixth corner-point 19 of the hexagon. In the embodiment shown in FIG. 2, body 17 is provided with ribs 16A, 16B, 16C, 16D, 16E and 16F on lower surface 12B of base 12 to provide additional structural strength to base 12. Other structural features can also be used to provide strength to base 12. In one embodiment, no such additional features are provided in base 12 for strength.

Referring back to FIG. 1, dolly-truck 18A has five caster wheels (such as 10A, 10B and 10C) supported by caster wheel supports (such as 9A, 9B and 9C). The five caster wheels 10A, 10B, 10C, 10D and 10E of dolly-truck 18A are supported such that the centers of all five caster wheels 10A, 10B, 10C, 10D and 10E lie in one plane (not shown explicitly). The five caster wheels 10A, 10B, 10C, 10D and 10E provide dolly-truck 18A with rolling movement over short distances in an upright position. The distance d4 between caster wheels 10A, 10B, 10C, 10D and 10E from the center of base 12 is 9 inches, which is greater than the 6 inch radius of a bucket conveyed in one embodiment. Therefore periphery 12C completely encloses the area of upper surface 12A covered by the object being conveyed. Such an arrangement ensures stability of dolly-truck 18A allowing dolly-truck 18A to be propelled by foot and to be tilted easily. Also base 12 is at a distance d5 of approximately 4 inches from the ground surface 20. Base 12 being close to the ground surface 20 provides stability to dolly-truck 18A.

Caster wheels 10A, 10B, 10C, 10D and 10E can be any caster wheel such as ball caster wheel 10F illustrated in FIG. 2B. In one embodiment ball caster wheels 10A, 10B, 10C, 10D and 10E and sleeves 9A, 9B, 9C, 9D and 9E are shielded chrome ball caster Part # CH 2051CP of Baker Sales Designers Hardware Catalog, 1993 available at any hardware store, such as Channel City Lumber, 35 Aero Camino, Goleta, California.

Dolly-truck 18A of FIG. 1 also has an axle 11 supported by truck wheel supports 13A and 13B. Two truck wheels 14A and 14B are mounted on axle 11 in a casterless manner, with 3/8 inch axle cap nuts Part # 887H from Hillman Fastner Catalog 1993 available at Mission Hardware 5754 Hollister Avenue, Goleta, California. Although an axle 11 is used in the embodiment of dolly-truck 18A illustrated in FIG. 1, truck wheels 14A and 14B can be attached to a body 17 by any other mechanism provided the truck wheels 14A and 14B are mounted parallel to each other in a non-swivelling casterless manner. In one embodiment, truck wheels 14A and 14B are 4 inch rubber wheels Part # WS.R.40 156 N3 from Baker Sales Designers Hardware Catalog, 1993.

Truck wheel supports 13A and 13B extend forward from base 12 for a distance sufficient to provide clearance between truck wheels 14A and 14B and nearby caster wheels 10A and 10B respectively. The distance between a tangent to periphery 12 and a line parallel to the tangent passing through the center of axle 11 (shown dotted in FIG. 2) is the distance d1 in FIG. 2. In one embodiment, truck wheels 14A and 14B extend distance d1 of 4 inches from the periphery of base 12.

Also, truck wheel supports 13A and 13B are positioned such that truck wheels 14A and 14B have a clearance from ground surface 20 when caster wheels 10A, 10B and 10C are in contact with ground surface 20. Clearance d2 (FIG. 1) is the distance between ground surface 20 and a plane parallel to ground surface 20 and tangential to truck wheels 14A and 14B. In one embodiment, truck wheels 14A and 14B have a diameter of 3 3/4 inches and are mounted on truck wheel supports 13A and 13B so as to have a clearance of d2 1/4 inch from ground surface 20. Truck wheels 14A and 14B allow dolly-truck 18A to convey an object over obstacles or negotiate stairs with tilting motion of a hand truck.

Thus, when dolly-truck 18A is moved in an upright position (see FIG. 1), dolly-truck 18A moves with caster wheels 10A, 10B, 10C, 10D and 10E in contact with ground surface 20. The clearance d2 between the truck wheels and the ground surface allows the dolly-truck 18A to be moved on caster wheels in the upright position without any interference from the casterless truck wheels 14A and 14B.

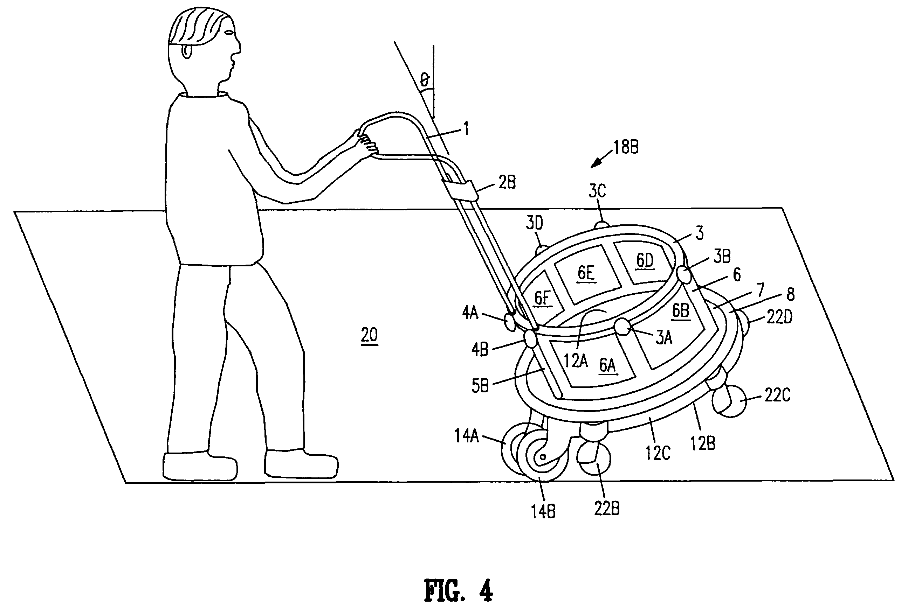

To negotiate obstacles, dolly-truck 18A is tilted using handle 1 and moved in a tilted position, in which case the caster wheels 10A, 10B, 10C, 10D and 10E are off (i.e. do not contact) ground surface 20, and truck wheels 14A and 14B are in contact with ground surface 20, similar to the tilted position of dolly-truck 18B in FIG. 4. Dolly-truck 18A can be moved easily in a tilted position on truck wheels 14A and 14B because truck wheels 14A and 14B are mounted parallel to each other in a non-swivelling casterless manner. Furthermore, truck wheels 14A and 14B can be positioned along the edge of a stair to go up or down staircases.

The small amount of clearance d2 of 1/4 inch allows dolly-truck 18A to move from the upright position into the tilted position within a small tilt angle θ (FIG. 4) of 10°. Such a small tilt angle allows a dolly-truck containing an open bucket with a liquid to be tilted without spilling the liquid on to ground surface 20. A larger tilt angle can be used if the center of mass of the liquid is low. Accordingly, dolly-truck 18A has the versatility to be used as a dolly for omnidirectional movement and at any time to be tilted and be used as a hand truck for negotiating obstacles.

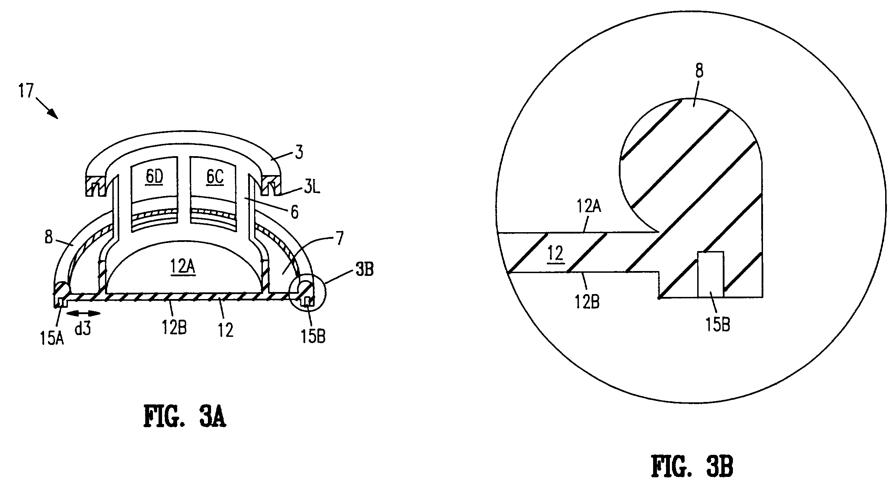

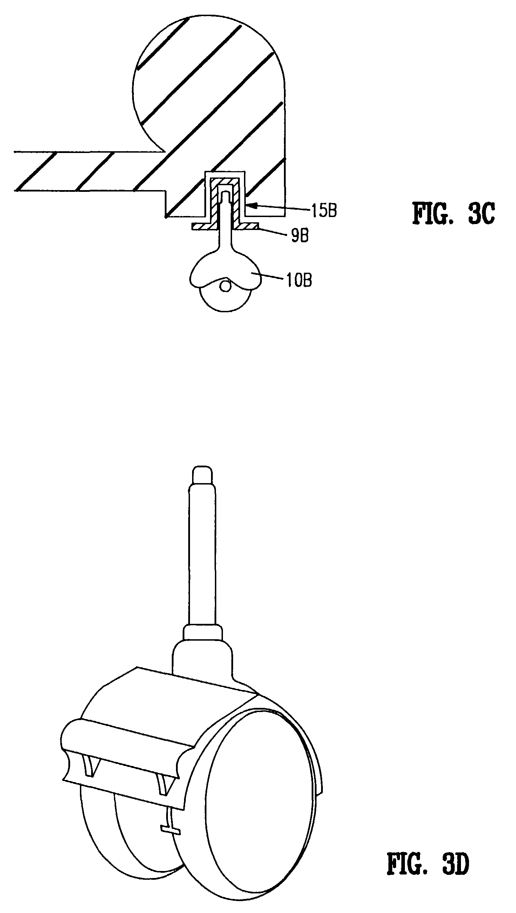

FIG. 3A shows an isometric cross-sectional view of body 17 of dolly-truck 18A taken in the X-X direction shown in FIG. 1. FIG. 3B shows a close-up view of a portion circled in FIG. 3A of the cross-section of the body 17. Body 17 includes a retaining wall 6 mounted in a central portion of upper surface 12A of base 12. In one embodiment, retaining wall 6 is formed integral with base 12 and has a diameter of 12 inches and height of 7 inches. Retaining wall 6 serves to hold the object being transported in its place on upper surface 12A of base 12 during movement of dolly-truck 18A.

Retaining wall 6 has a retaining ring 3 with a lip 3L at its free end. Retaining ring 3 serves to keep the top of the object being conveyed from moving substantially when dolly-truck 18A is moved or tilted. To improve visibility of an object's label, retaining wall 6 is provided with holes 6A, 6B, 6C, 6D and 6E (see FIG. 1) in one embodiment. In the embodiment of dolly-truck 18A of FIG. 3B, each caster wheel support (such as 9C) is mounted in a slot (such as slot 15B). To assemble dolly-truck 18A, axle 11 and truck wheels 14A and 14B are attached and sleeves 9A, 9B, 9C, 9D and 9E are epoxied into the corresponding holes such as hole 15B of body 17 (FIG. 3C). Other methods of joining sleeves 9A, 9B, 9C, 9D and 9E into their corresponding holes can also be used. Then caster wheels 10A, 10B, 10C, 10D and 10E are popped into sleeves 9A, 9B, 9C, 9D and 9E.

In one embodiment of dolly-truck 18A, body 17 includes a kick-ring 8 mounted on a top portion of periphery 12C of base 12. Kick-ring 8 allows short distance rolling of dolly-truck 18A in the upright position by a user pushing on kick-ring 8 with the user's foot which frees the user's hands. In one embodiment, kick ring 8 has a cross-sectional diameter of 1 inch.

In one embodiment of dolly-truck 18A, adequate clearance is provided between kick-ring 8 and retaining wall 6 to expose an annular portion of upper surface 12A of base 12. The annular portion forms a spill surface 7 that holds any contents (such as a liquid or a powdery chemical) spilled from an open bucket during any movement (in the upright or tilted position) of dolly-truck 18. In one embodiment, spill surface 7 is approximately 2 ½ inch annular surface (see annular surface width "d3" in FIG. 3A) around retaining wall 6. Spill surface 7 can also be used to carry tools.

In one embodiment of dolly-truck 18A, caster wheel supports 9A, 9B and 9C are placed adjacent to and integrally connected with kick-ring 8 (see FIG. 3B). Such a distant placement of caster wheels from the center of base 12 provides greater stability to dolly-truck 18A which permits propulsion by foot and easy tilting.

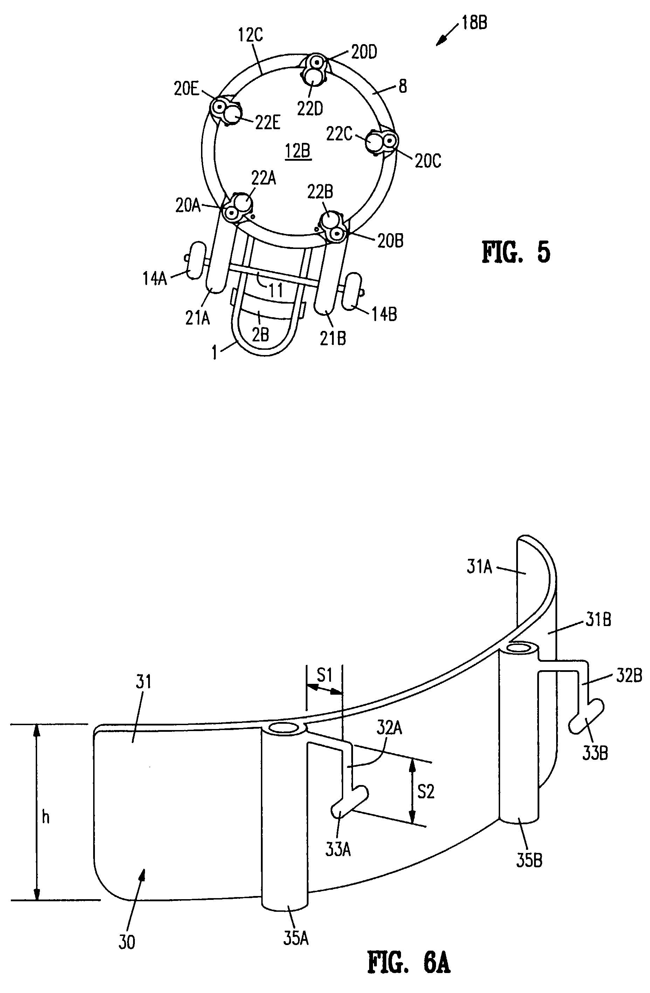

Referring back to FIG. 1, dolly-truck 18A also includes an optional adjustable handle 1 which is connected to and extends forward and upward from body 17. Handle 1 has two arms 1A and 1B which are mounted in extension tubes 5A and 5B of retaining wall 6 and frictionally held in place in the extension tubes 5A and 5B by adjustment knobs 4A and 4B. Handle arms 1A and 1B are connected to each other by a handle brace 2A. The two arms of handle 1 are placed into extension tubes 5A and 5B and adjustment knobs 4A and 4B are tightened to secure handle 1 to body 17. Thus handle 1 is securely and rigidly attached to body 17 by knobs 4A and 4B so that body 17 tilts on truck wheels 14A and 14B when handle 1 is pushed downward. In one embodiment, handle 1 is a single tube of aluminum of 13/16 inch outer diameter, 5/8 inch inner diameter and 38 inches in length, formed into a U shape as shown in FIGs. 1 and 5. Adjustment knobs 4A and 4B can be any knobs such as rosette knob for a 1/4 inch Allen screw, Part # SPI 99-607-4 of Swiss Precision Instrument Catalog, 1993 from Specialty Tool of Bolt, 108 Aero Camino, Goleta, California.

Extension tubes 5A and 5B are formed as an integral part of retaining wall 6 and are supported by a solid portion 6F of wall 6. Extension tubes 5A and 5B have longitudinal holes (not shown) in the Y direction of sufficient diameter to accept arms 1A and 1B of handle 1. In one embodiment, longitudinal holes 5A and 5B have a diameter of 1 1/4 inch, a length of 7 inches, and longitudinal hole of diameter of 3/4 inch and 6½ inches depth. Also, extension tubes 5A and 5B have lateral holes (not shown) which are threaded to accept screws extending from adjustment knobs 4A and 4B. Handle 1 can be raised or lowered depending on the height of the user. Adjustment knobs 4A and 4B can be unscrewed to allow handle 1 to be moved up and/or down to adjust the length of handle 1. The length of handle 1 can be adjusted by an amount equal to the length of extension tubes 5A and 5B.

Handle 1 is used by a user to move dolly-truck 18A in a rolling movement in an upright position (FIG. 1A) similar to a conventional dolly and also to move dolly-truck 18A in a tilted position over obstacles (FIG. 4A) similar to a conventional hand truck. If handle 1 interferes with any given process or use of the dolly-truck, handle 1 can be completely removed from extension tubes 5A and 5B of retaining wall 6. Then retaining ring 3 is used to lift and carry dolly-truck 18A (and the bucket) when necessary. Such a configuration is especially advantageous for short distance movement activities such as painting, because body 17 of the dolly-truck 18A can be pushed by foot.

In one embodiment of this invention, instead of a ball caster wheel such as part number CH2051CP (above) a grip neck stem locking caster wheel such as part number 472-31-0012-00-00 of Plastic Guide Catalog 20-E, 1994 available from Plastic Guide-Comtek Division, 105 Progress Lane, Waterbury, CT 06705. Such a locking caster wheel allows the caster wheel to be locked which in turn allows dolly-truck 18A to remain stationary on a tilted surface.

FIG. 4 shows an alternative embodiment of a dolly-truck 18B in accordance with this invention. Dolly-truck 18B has the same features as those discussed above for dolly-truck 18A of FIG. 1, except for caster wheel supports, caster wheels and handle brace. Many of the same reference numerals are used in FIGs. 1 and 4 for convenience.

Caster wheel supports 20A, 20B, 20C, 20D and 20E of dolly-truck 18B are arranged equidistant from each other at corner-points of a pentagon as shown in a bottom view in FIG. 5. Two caster wheel supports 20A and 20B are arranged adjacent truck wheel supports 21A and 21B. Caster wheels 22A, 22B, 22C, 22D and 22E which are supported by caster wheel supports 20A, 20B, 20C, 20D and 20E are shielded ball caster wheels. The shields on the balls prevent spilled liquid from being conveyed or tracked by wheels 22A, 22B, 22C, 22D and 22E.

Also in the embodiment of FIG. 4, retaining ring 3 has retaining knobs 3A, 3B, 3C and 3D (similar to adjustment knobs 4A and 4B) having screws which secure the object being carried firmly to dolly-truck 18B.

Dolly-truck 18B also has a handle brace 2B which is different from handle brace 2A of dolly-truck 18A. Handle brace 2B has a surface contoured to allow stacking of a number of buckets, one on top of another and moved by dolly-truck 18B.

In one embodiment, body 17 of dolly-truck 18A is formed as a single piece of fiber-glass and in alternative embodiments body 17 is formed of polyethylene or other polymeric material, of metals such as steel and/or aluminum or other material. Holes (such as holes 15A and 15B) are either molded into body 17 as body 17 is being formed or drilled into body 17 after body 17 has been formed.

In one embodiment, body 17 of dolly-truck 18A is formed as one piece of injection molded, high-strength plastic. Extension tubes 5A and 5B, truck wheel supports 13A and 13B, caster wheel supports 9A, 9B, 9C, 9D and 9E, retaining wall 6, retaining ring 3, kick ring, 8 base 12 and ribs 16A, 16B, 16C, 16D, 16E and 16F are all molded into body 17.

FIG. 6A illustrates one embodiment of a handle brace 30 for use in a dolly truck in accordance with this invention. Handle brace 30 has a brace body 31 which has an inner surface 31A contoured to allow stacking of a number of buckets one on top of another. In one embodiment, surface 31A has a cylindrical curvature with a radius of 6 inches. Handle brace 30 also includes arm sleeves 35A and 35B on outer surface 31B of brace body 31. Arm sleeves 35A and 35B are similar to extension tubes 5A and 5B (above) and have an outer diameter of 1-¼ inch and an inner diameter of 3/4 inch. Handle brace 30 has a height H = 2-½ inches. Also included in handle brace 30 are lid clips 32A and 32B. Lid clips 32A and 32B preferably of a somewhat elastic material capable of being bent out of position and then snapping back into position, are supported at one end by arm sleeves 35A and 35B respectively. At the other end, lid clips 32A and 32B are provided with finger grips 33A and 33B respectively. Lid clips 32A and 32B are formed in the shape of an L with the shorter leg having a length S1 = 3/8ths inch and the longer leg having a length S2 = ½ inch.

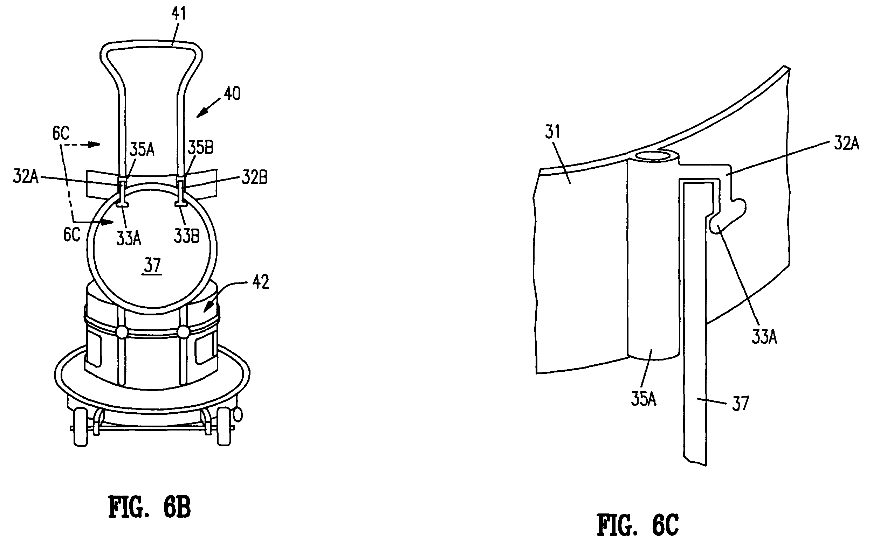

Lid clips 32A and 32B are used to hold a lid 37 of a 5 gallon bucket 42 in a dolly truck 40 as shown in FIG. 6B. The arms of handle 41 are passed through arm sleeves 35A and 35B of handle brace 30. A lid 37 is supported by lid clips 32A and 32B by pulling finger grips 33A and 33B outward and sliding lid 37 in the space between lid clip 32A and 32B and arm sleeve 35A and 35B respectively (FIG. 6C), and releasing finger grips 33A and 33B.

FIG. 7A illustrates another embodiment of a dolly truck 50 in accordance with this invention. Dolly truck 50 has a retaining wall 51 and a retaining ring 52 which are open, and in all other respects dolly truck 50 has the same components as dolly truck 18A of FIG. 1. The open arrangement of dolly-truck 50's retaining wall and retaining ring FIG. 7A permits a bucket 55 to be placed on upper surface 54A of base 54 without bucket 55 having to be lifted over the retaining ring (which is necessary for dolly-truck 18A of FIG. 1).

FIGs. 7B and 7C illustrate two views of dolly truck 50 of FIG. 7A. In the specific embodiment shown in FIGS. 7A, 7B and 7C, retaining wall 51 and retaining ring 52 are semi-circular in shape. However, any other open shape can be used in accordance with this invention. Bucket 55 is securely held in place on base 54 by retaining knobs 53A and 53B (similar to retaining knobs 3A, 3B, 3C, and 3D of FIG. 4 above).

A dolly-truck as described above can be (1) scooted along in the upright position by pushing with one's foot on a dolly-truck kick ring, (2) pushed forward by use of a dolly handle, or (3) dragged with a paint extension pole (used for rolling wall surfaces) inside an open bucket carried by the dolly-truck.

Persons skilled in the art can use the above discussed embodiments as a basis for the necessary elements to be cohesively implemented to provide a durable, washable and stable embodiment of a dolly-truck.

Although the present invention has been described in connection with the above described illustrative embodiments, the present invention is not limited thereto. For example, instead of forming body 17 as an integral piece, various parts of body 17 can be formed separately and joined together by conventional methods. Also, retaining wall 6 can be formed as a solid surface without holes 6A, 6B, 6C, 6D and 6E. Moreover, instead of five caster wheels and two truck wheels, any number of caster wheels and truck wheels can be used in accordance with this invention. Furthermore, although handle 1 is described as being connected to body 17 via extension tubes 5A and 5B, a handle can be connected to a body in any conventional manner. Therefore, various modifications and adaptations of the above discussed embodiments are encompassed by this invention as set forth in the appended claims.

## Claims

1. An apparatus for transporting an object comprising:
a single piece integrally formed body comprising a substantially circular base, a plurality of caster wheel supports connected to said base, and a plurality of truck wheel supports connected to and extending forward from said base;
a plurality of caster wheels supported by said plurality of caster wheel supports, each caster wheel support supporting a caster wheel in a substantially coplanar relationship to other caster wheels of said plurality of caster wheels; and
a plurality of truck wheels supported by said plurality of truck wheel supports such that said truck wheels have clearance from a ground surface when said plurality of caster wheels are in contact with said ground surface;
whereby said apparatus is capable of motion in an upright position or a tilted position, such that a tilt angle between said upright position and said tilted position is sufficiently small to allow said apparatus to be moved by a user who is standing or moving in an upright position and, said apparatus can move in said upright position with only said plurality of caster wheels in contact with said ground surface, said plurality of caster wheels permitting omnidirectional movement of said apparatus in said upright position, and said apparatus can move in said tilted position with at least said truck wheels in contact with said ground surface.

2. The apparatus of Claim 1, wherein said plurality of caster wheel supports are arranged at substantially equally spaced positions on a periphery of said base.

3. The apparatus of Claim 1, wherein said body has an upper surface and a retaining wall integrally connected to said upper surface, said retaining wall being capable of retaining said object on said apparatus when said apparatus is moved.

4. The apparatus of Claim 1 further comprising a handle rigidly connected to and extending forward and upward from said body, said handle having a sufficient length for gripping by a user.

5. The apparatus of Claim 4, wherein said handle is connected to said base by at least one knob, said knob allowing the length of said handle to be adjusted.

6. The apparatus of Claim 2 wherein said plurality of caster wheel supports are integrally connected to said periphery of said base.

7. The apparatus of Claim 1 wherein said plurality of truck wheel supports are formed adjacent to and integrally connected to a pair of said caster wheel supports.

8. The apparatus of Claim 7 further comprising a plurality of caster wheels, wherein at least one caster wheel of said plurality of caster wheels is, a locking caster wheel comprising means for locking, said locking caster wheel when locked causing said apparatus to remain stationary on a tilted surface.

9. The apparatus of Claim 1 wherein said body further comprises a retaining wall formed integral with said base, said retaining wall having an inner surface conforming to a curvature of said object.

10. The apparatus of Claim 9 wherein said retaining wall has an extension tube, said extension tube supporting a handle connected to and extending forward and upward from said body, said handle having a length sufficient for gripping by a user.

11. The apparatus of Claim 9 wherein said body has a kick-ring mounted on a periphery of said base so that a portion of said base between said kick-ring and said retaining wall forms a spill surface.

12. The apparatus of Claim 11 wherein said caster wheel supports are placed adjacent to and integrally connected with said kick-ring.

13. The apparatus of Claim 9 wherein said retaining wall has a retaining ring at an upper end of said retaining wall.

14. The apparatus of Claim 13 wherein said retaining ring is semi-circular in shape.

15. The apparatus of Claim 14 further comprising a plurality of retaining knobs supported by said retaining ring wherein said retaining knobs are capable of firmly securing the objects to said apparatus.

16. The apparatus of Claim 10 further comprising a lid clip, said lid clip being supported by said handle, said lid clip being capable of holding a lid of said object.

17. The apparatus of Claim 16 wherein said lid clip is formed of a material sufficiently elastic to allow the lid clip to be bent out of position to hold said lid and to snap back into position when released.

18. An apparatus for transporting an object comprising:
a body comprising a base, a retaining wall connected to said base and a plurality of caster wheel supports connected to a periphery of said base;
a plurality of caster wheels held by said plurality of caster wheel supports, each caster wheel support holding a caster wheel in a coplanar relationship to other caster wheels of said plurality of caster wheels; and
a kick-ring integrally formed on a periphery of said base so that a portion of said base between said kick-ring and said retaining wall forms a spill surface, said retaining wall having a height in relation to a dimension of said kick ring sufficient to keep said object from moving in said apparatus when said object is held in said apparatus and said apparatus is moved;
wherein said caster wheel supports are placed adjacent to and connected with said kick-ring.

19. The apparatus of Claim 18 wherein said spill surface can hold at least a portion of liquid sloshed out of the object being transported by said apparatus.

20. The apparatus of Claim 18 further comprising a lid clip supported by said body, said lid clip being formed in an L shape with a first leg shorter than a second leg.

21. The apparatus of Claim 20 wherein said lid clip is formed of a material sufficiently elastic to allow the lid clip to be bent out of position to hold the lid and to snap back into position when released.

22. The apparatus of Claim 18 wherein at least one caster wheel of said plurality of caster wheels is capable of being locked.

23. An apparatus for transporting an object comprising:
a single piece integrally formed body comprising a base, a retaining wall integrally connected to said base and a plurality of truck wheel supports integrally connected to and extending forward from said base;
a plurality of truck wheels held by said plurality of truck wheel supports;
a handle connected to and extending forward and upward from said body, said handle having a sufficient length for gripping by a user, said handle comprising a handle brace and two handle arms, said handle brace being connected between said handle arms; and
a kick-ring attached to a periphery of said base so that a portion of said upper surface between said kick-ring and said retaining wall forms a spill surface, said retaining wall having a height in relation to a dimension of said kick ring sufficient to keep said object from moving when said object is held in said apparatus and said apparatus is moved.

24. The apparatus of Claim 23 wherein [said object is an open bucket containing a liquid and said spill surface holds at least a portion of liquid sloshed out of the object transported by said apparatus.

25. The apparatus of Claim 23 further comprising a lid clip, said lid clip being formed in an L shape with a first leg shorter than a second leg.

26. The apparatus of Claim 25 wherein said lid clip is formed of a material sufficiently elastic to allow the lid clip to be bent out of position to hold said lid and to snap back into position when released.

27. The apparatus of Claim 1 wherein said body further comprises a plurality of ribs formed on a lower surface of said base.

28. The apparatus of Claim 27 wherein said base is disk-shaped.

29. The apparatus of Claim 8 wherein at least one caster wheel of said plurality of caster wheels comprises a shield.

30. The apparatus of Claim 3 further comprising at least one extension tube integrally formed in said retaining wall, said extension tube defining a longitudinal hole sufficient to accept an arm of a handle used to move said apparatus.

31. The apparatus of Claim 18 wherein said body further comprises a plurality of ribs formed on a lower surface of said base.

32. The apparatus of Claim 23 further comprising An apparatus for transporting an object comprising:
a single piece integrally formed body comprising a base, a retaining wall integrally connected to said base and a plurality of truck wheel supports integrally connected to and extending forward from said base;
a plurality of truck wheels supported by said plurality of truck wheel supports;
a handle connected to and extending forward and upward from said body, said handle having a sufficient length for gripping by a user, said handle comprising a handle brace and two handle arms, said handle brace being connected between said handle arms;
a kick-ring integrally formed on a periphery of said base so that a portion of said upper surface between said kick-ring and said retaining wall forms a spill surface; and;
at least one extension tube integrally formed in said retaining wall, said extension tube defining a longitudinal hole sufficient to accept an arm of a handle used to move said apparatus.

33. The apparatus of Claim 1 wherein said single-piece integrally formed body is formed of at least one molding material selected from a group consisting of fiber-glass and plastics.

34. The apparatus of Claim 18 wherein said body is integrally formed as a single-piece of at least one molding material selected from a group consisting of fiber-glass and plastics.

35. The apparatus of Claim 23 wherein said single-piece integrally formed body is formed of at least one molding material selected from a group consisting of fiber-glass and plastics.

36. The apparatus of Claim 18 wherein said base is substantially circular and said retaining wall is integrally connected to said base.

37. The apparatus of Claim 18 wherein said plurality of caster wheel supports are integrally connected to said base.

38. The apparatus of Claim 18 further comprising a handle connected to and extending forward and upward from said body, said handle having a length sufficient for gripping by a user, said handle including a handle brace located away from said base by a distance sufficient to allow stacking a number of said objects one on top of another.

39. The apparatus of Claim 38 further comprising a pair of lid clips attached to said handle brace, each of said lid clips being formed in an L shape of a material sufficiently elastic to allow said lid clips to be bent out of position and to snap back into position when released.

40. An apparatus for transporting an object comprising:
a single piece integrally formed body comprising a base, a plurality of caster wheel supports connected to said base, and a plurality of truck wheel supports connected to and extending forward from said base;
a plurality of caster wheels held by said plurality of caster wheel supports, each caster wheel support holding a caster wheel in a substantially coplanar relationship to other caster wheels of said plurality of caster wheels; and
a plurality of truck wheels held by said plurality of truck wheel supports such that said truck wheels have clearance from a ground surface when said plurality of caster wheels are in contact with said ground surface;
whereby said apparatus is capable of motion in an upright position or a tilted position, such that a tilt angle between said upright position and said tilted position is sufficiently small to allow said apparatus to be moved by a user who is standing or moving in an upright position, said apparatus can move in said upright position with only said plurality of caster wheels in contact with said ground surface, said plurality of caster wheels permitting omnidirectional movement of said apparatus in said upright position, and said apparatus can move in said tilted position with at least said truck wheels in contact with said ground surface.

41. The apparatus of Claim 40 further comprising a handle rigidly connected to and extending forward and upward from said body, said handle having a sufficient length for gripping by a user.

42. An apparatus for transporting an object comprising:
a body comprising a substantially circular base, a plurality of caster wheel supports connected to said base, and a plurality of truck wheel supports connected to and extending forward from said base;
a plurality of caster wheels held by said plurality of caster wheel supports, each caster wheel support holding a caster wheel in a substantially coplanar relationship to other caster wheels of said plurality of caster wheels; and
a plurality of truck wheels held by said plurality of truck wheel supports such that said truck wheels have clearance from a ground surface when said plurality of caster wheels are in contact with said ground surface;
whereby said apparatus is capable of motion in an upright position or a tilted position, such that a tilt angle between said upright position and said tilted position is sufficiently small to allow said apparatus to be moved by a user who is standing or moving in an upright position, said apparatus can move in said upright position with only said plurality of caster wheels in contact with said ground surface, said plurality of caster wheels permitting omnidirectional movement of said apparatus in said upright position, and said apparatus can move in said tilted position with at least said truck wheels in contact with said ground surface.

43. The apparatus of Claim 42 further comprising a handle rigidly connected to and extending forward and upward from said body, said handle having a sufficient length for gripping by a user.

44. The apparatus of Claim 42, wherein said plurality of caster wheel supports are arranged at substantially equally spaced positions around a circle on said base.
